(19) Europäisches Patentamt
European Patent Office
Office européen des brevets

(11) **EP 4 679 193 A1**

(12) **EUROPEAN PATENT APPLICATION**

(43) Date of publication:
**14.01.2026 Bulletin 2026/03**

(21) Application number: **24425034.6**

(22) Date of filing: **12.07.2024**

(51) International Patent Classification (IPC):
*G03H 1/00* (2006.01)    *G02B 27/01* (2006.01)
*G03H 1/22* (2006.01)

(52) Cooperative Patent Classification (CPC):
**G03H 1/2294; G02B 27/0172; G03H 1/0005;**
G02B 2027/0174; G02B 2027/0178

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Luxottica S.r.l.**
**32021 Agordo (Belluno) (IT)**

(72) Inventors:
• **Cesaratto, Anna**
**32021 Agordo (BL) (IT)**

• **Ongarello, Tommaso**
**32021 Agordo (BL) (IT)**
• **Bassi, Andrea**
**20133 Milano (MI) (IT)**
• **Pozzi, Paolo**
**20133 Milano (MI) (IT)**
• **Cerioni, Alessandro**
**20133 Milano (MI) (IT)**
• **Astarita, Marco**
**20133 Milano (MI) (IT)**

(74) Representative: **Biallo, Dario et al**
**Barzanò & Zanardo S.p.A.**
**Via Borgonuovo, 10**
**20121 Milano (IT)**

(54) **METHOD FOR GENERATING A HOLOGRAM**

(57)    Method for generating a hologram comprising at least a line segment, comprising the step of illuminating a modulating element with a coherent light beam obtaining a modulated light beam having a modulated light phase, wherein the modulating element sets the modulated light phase simulating the effect of an astigmatic lens.

Fig. 1

**Description**

The present invention refers to a method for generating a computer-generated hologram, in particular a hologram comprising at least a line segment. In the following, the term "hologram" will refer to the real or virtual three-dimensional image generated by illuminating a dynamic holographic display with a coherent light beam. In the field of computer-generated holography, there are two main categories of known methods for generating a hologram using a dynamic holographic display, such as a spatial light modulator, conveniently illuminated by a coherent light source and controlled by a computer program executed by a computer in order to produce a modulated light beam that generates the desired hologram.

The first category comprises the so-called point cloud methods. These methods provide for a control of the modulator that causes the modulated light beam to generate a set of points (usually hundreds or thousands) distributed in space: if the position and the movement of the generated points is controlled in a continuous way, these points can form a dynamic hologram in space. However, in order to form a sufficiently detailed hologram (even a simple line segment) that changes in time with smooth transitions, it is necessary to generate and to continuously modify the position of a large number of points. It is clear that a real-time continuous control of such a large number of objects requires large computational resources, inevitably raising the cost of the operation and forcing to use bulky hardware.

The second category comprises the so-called layer-based methods. These methods provide for a control of the modulator that causes the modulated light beam to generate a set of bidimensional images (usually two or three) positioned one behind the other: a continuous modification of the bidimensional images creates the illusion of a three-dimensional dynamic hologram. However, in order to create the illusion of a sufficiently detailed hologram (even a simple line segment) that changes in time with smooth transitions, it is necessary to continuously modify each bidimensional image. Again, it is clear that a real-time continuous modification of such detailed bidimensional images requires large computational resources, inevitably raising the cost of the operation and forcing to use bulky hardware.

An object of the present invention is to overcome the above-mentioned drawbacks and in particular to set up a method for generating a hologram comprising at least a line segment that requires limited computational resources, is cost-effective to apply and requires hardware that occupies a limited volume.

Another object of the present invention is to set up a method for generating a line segment hologram of arbitrary length, in an arbitrary position and with an arbitrary orientation in space.

Another object of the present invention is to set up a method for generating a detailed hologram that changes in time with smooth transitions.

Another object of the present invention is to realize an apparatus configured to apply such a method in a cost-effective way.

Another object of the present invention is to realize a head-mountable device configured to apply such a method, allowing a wearer to experience a detailed real-time continuously-updated augmented reality.

These and other results are achieved according to the present invention setting up a method according to claim 1, an apparatus according to claim 10, a head-mountable device according to claim 15, and a computer program according to claim 19.

Further preferred characteristics are the object of the dependent claims.

The present invention will be now described, in an illustrative and non-limiting way, referring to the attached schematic drawings, in which:

- figure 1 is a schematic drawing of a preferred embodiment of an apparatus for generating a hologram according to the present invention;
- figures 2a-2f are schematic drawings of a spatial light modulator generating line segment holograms with different lengths, positions and orientations applying a method according to the present invention;
- figure 3 is a schematic drawing of a first embodiment of a head-mountable device comprising the apparatus depicted in figure 1;
- figure 4 is a schematic drawing of a second embodiment of a head-mountable device comprising the apparatus depicted in figure 1;
- figure 5 is a schematic drawing of a third embodiment of a head-mountable device comprising the apparatus depicted in figure 1.

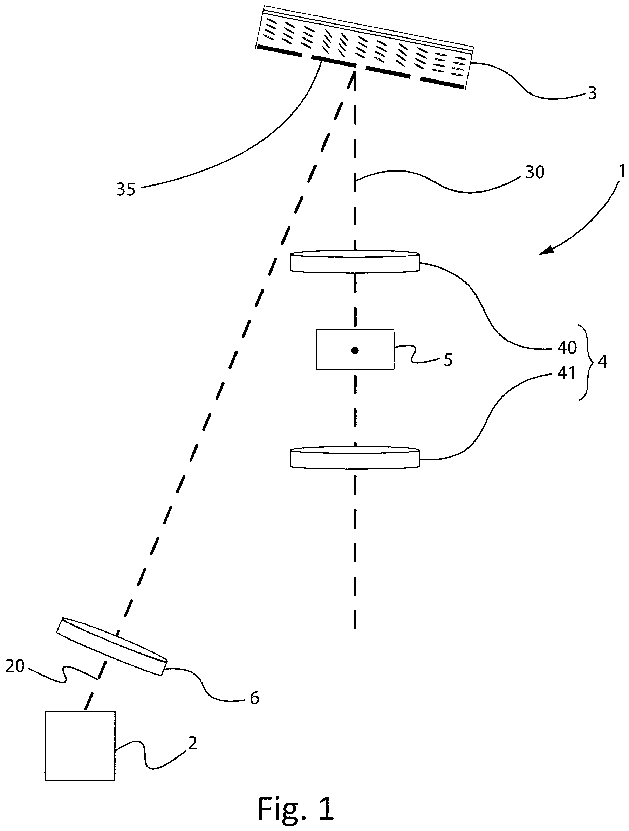

With reference to figure 1, an apparatus for generating a hologram is globally referred to as 1. The apparatus 1 comprises a source 2 of coherent light that is configured to produce a coherent light beam 20, and a modulating element 3 configured to modulate the coherent light beam 20 obtaining a modulated light beam 30 having a corresponding modulated light phase $\varphi$.

The source 2 can be a laser source 2, or any light source configured to produce a coherent light beam 20 having a coherence sufficient to generate holograms that are visible to the human eye. The produced coherent light beam 20 is substantially monochromatic and has a characteristic wavelength λ.

The modulating element 3 can be a spatial light modulator 3, preferably a phase-only spatial light modulator 3. The modulating element 3 is illuminated by the coherent light beam 20 produced by the source 2, and produces a modulated light beam 30 having a modulated light phase φ. In particular, the modulating element 3 is configured to modulate the coherent light beam 20 producing a modulated light beam 30 in such a way that the modulated light phase φ is set to a predetermined value that can be different for each point of the modulating element 3 that is illuminated by the coherent light beam 20 and produces the modulated light beam 30. More in particular, in use, the modulating element 3 sets the modulated light phase φ according to the instructions sent by a data processing unit (not shown) associated to the modulating element 3 and configured to control the operation of the modulating element 3; in fact, the modulating element 3 is associable to a data processing unit that is configured to control its operation.

The modulating element 3 of figure 1 produces the modulated light beam 30 through a reflection of the coherent light beam 20. However, the modulating element 3 could also produce the modulated light beam 30 through a transmission of the coherent light beam 20 through the modulating element 3 itself.

According to the invention, the modulating element 3 sets the modulated light phase φ simulating the effect of an astigmatic lens: this means that the modulating element 3 sets the modulated light phase φ in such a way that the self-interference pattern of the modulated light beam 30 generates a line segment in the same way as if the modulated light beam 30 was instead produced by refraction of the coherent light beam 20 through an astigmatic lens.

This cause the modulated light beam 30 to generate a line segment hologram using limited computational resources and in a fast and cost-effective way, since such a line segment is directly generated and it is not necessary to reconstruct it using a plurality of points or bidimensional images.

More in detail, the modulating element 3 sets the modulated light phase φ to an elliptical phase or a hyperbolic phase, preferably with the possibility of setting the modulated light phase φ also to a parabolic phase. In particular, the modulating element 3 is said to set the modulated light phase φ to an elliptical phase, a hyperbolic phase or a parabolic phase when the points of the modulating element 3 that set a same value of the modulated light phase φ form, on the modulating element 3, respectively an ellipse (also deformed), a hyperbola (also deformed) or a parabola (also deformed). Therefore, the modulating element 3 is configured to set the modulated light phase φ to at least one (but preferably both alternatively) of an elliptical phase and a hyperbolic phase. Preferably, the modulating element 3 is able to set the modulated light phase φ also to a parabolic phase.

The modulating element 3 has a substantially disk-shaped active region 35, which is the portion of the modulating element 3 that modulates the coherent light beam 20 producing the modulated light beam 30. This allows to further limit the computational resources needed to generate the line segment hologram, since it has been observed that the calculations are greatly simplified if a disk-shaped active region 35 is used. Further, a disk-shaped active region 35 is particularly suitable if the modulated light beam 30 has to pass through a circular hole, such as the human pupil.

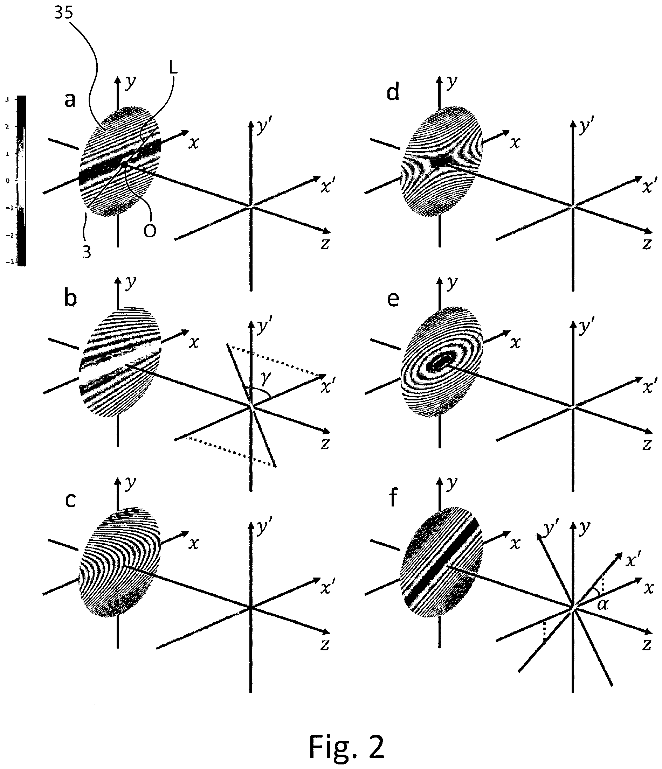

With reference to figure 2a, the active region 35 has a centre O and a diameter L, and defines a Cartesian coordinate system centred in the centre O and comprising an optical axis z perpendicular to the active region 35, and a first reference axis x and a second reference axis y lying on the active region 35.

The defined Cartesian coordinate system allows to identify each point of the active region 35 with a pair of coordinates (x,y), and to identify as φ(x,y) the modulated light phase φ set by the point of the active region 35 of coordinates (x,y).

According to the invention, it is possible to generate a line segment hologram of arbitrary length, in an arbitrary position and with an arbitrary orientation in space, simply by using the modulating element 3 to set the modulated light phase φ(x,y) to appropriate values for each point (x,y) of the modulating element 3.

In particular, a line segment in space can be identified with the following six parameters:

- the line segment length a;
- the Cartesian coordinates $\overline{x}, \overline{y}, \overline{z}$ of the midpoint of the line segment;
- the inclination angle γ (visible in figure 2b) of the line segment with respect to the reference plane xy defined by the first reference axis x and the second reference axis y;
- the angle α (visible in figure 2f) defined between the orthogonal projection of the line segment on the reference plane xy and the first reference axis x.

It is useful to define a rotated coordinate system:

$$x' = x \cos\alpha - y \sin\alpha \ , \ y' = x \sin\alpha + y \cos\alpha,$$

$$\bar{x}' = \bar{x}\cos\alpha - \bar{y}\sin\alpha \ \text{ and } \ \bar{y}' = \bar{x}\sin\alpha + \bar{y}\cos\alpha.$$

It is useful to define also the following quantities:

$$p' = \frac{\pi(L - a\cos\gamma)}{\lambda\bar{z}L} \ \text{ and } \ q' = \frac{\pi}{\lambda(\bar{z} - x'\tan\gamma)}.$$

According to the invention, using the above-defined parameters, coordinates and quantities, it is possible to generate a line segment hologram of arbitrary length, in an arbitrary position and with an arbitrary orientation setting the modulated light phase $\varphi(x,y)$ for each point $(x,y)$ of the active region 35 of the modulating element 3 as follows:

$$\varphi(x,y) = (p'x'^2 + q'y'^2) + \frac{2\pi}{\lambda\bar{z}}(\bar{x}'x' + \bar{y}'y')$$

If $\gamma = 0$, then $p' = \dfrac{\pi(L - a)}{\lambda\bar{z}L}$ and $q' = \dfrac{\pi}{\lambda\bar{z}}$, and a line segment hologram parallel to the reference plane xy is generated.

If $\alpha = 0$, then $x' = x$, $y' = y$, $\bar{x}' = \bar{x}$ and $\bar{y}' = \bar{y}$, and a line segment hologram is generated that is rotated only around the second reference axis y.

If $\bar{x} = 0$ and $\bar{y} = 0$, then a line segment hologram centred on the optical axis z is generated.

With reference to figure 2a, a line segment hologram is generated that is centred on the optical axis z at distance $z_0$ from the modulating element 3, has a line segment length a that is equal to the diameter L of the active region 35 and is parallel to the first reference axis x. This line segment hologram can be generated setting the modulated light phase $\varphi(x,y)$ to a parabolic phase, i.e. with $a = L$, $\gamma = 0$, $\alpha = 0$, $\bar{x} = 0$, $\bar{y} = 0$ and $\bar{z} = z_0$. However, it is preferred in general that the generated line segment hologram has a line segment length a that is different from the diameter L of the active region, and also different from zero. Therefore, it is preferred that the modulated light phase $\varphi(x,y)$ is set to an elliptical phase or a hyperbolic phase instead of a parabolic phase.

With reference to figure 2d, a line segment hologram is generated that is centred on the optical axis z at distance $z_0$ from the modulating element 3, has a line segment length a that is greater than the diameter L of the active region 35 and is parallel to the first reference axis x. This line segment hologram can be generated setting the modulated light phase $\varphi(x,y)$ to a hyperbolic phase, i.e. with $a > L$, $\gamma = 0$, $\alpha = 0$, $\bar{x} = 0$, $\bar{y} = 0$ and $\bar{z} = z_0$.

With reference to figure 2e, a line segment hologram is generated that is centred on the optical axis z at distance $z_0$ from the modulating element 3, has a line segment length a that is less than the diameter L of the active region 35 and is parallel to the first reference axis x. This line segment hologram can be generated setting the modulated light phase $\varphi(x,y)$ to an elliptical phase, i.e. with $a < L$, $\gamma = 0$, $\alpha = 0$, $\bar{x} = 0$, $\bar{y} = 0$ and $\bar{z} = z_0$.

With reference to figure 2f, a line segment hologram is generated that is centred on the optical axis z at distance $z_0$ from the modulating element 3, has a line segment length a that is equal to the diameter L of the active region 35 and is rotated only around the optical axis z. This line segment hologram can be generated setting the modulated light phase $\varphi(x,y)$ to a rotated parabolic phase, i.e. with $a = L$, $\gamma = 0$, $\alpha \neq 0$, $\bar{x} = 0$, $\bar{y} = 0$ and $\bar{z} = z_0$.

With reference to figure 2c, a line segment hologram is generated that is shifted by a distance $x_0$ along the first reference axis x with respect to the optical axis z, is at a distance $z_0$ from the modulating element 3, has a line segment length a that is equal to the diameter L of the active region 35 and is parallel to the first reference axis x. This line segment hologram can be generated setting the modulated light phase $\varphi(x,y)$ to a shifted parabolic phase, i.e. with $a = L$, $\gamma = 0$, $\alpha = 0$, $\bar{x} = x_0$, $\bar{y} = 0$ and $\bar{z} = z_0$.

With reference to figure 2b, a line segment hologram is generated that is centred on the optical axis z at distance $z_0$ from the modulating element 3, has a line segment length a that is equal to the diameter L of the active region 35 and is rotated only around the second reference axis y. This line segment hologram can be generated setting the modulated light phase $\varphi(x,y)$ to a deformed parabolic phase, i.e. with $a = L$, $\gamma \neq 0$, $\alpha = 0$, $\bar{x} = 0$, $\bar{y} = 0$ and $\bar{z} = z_0$.

It has to be understood that the generic term "elliptical phase" also comprises rotated elliptical phases, shifted elliptical phases and deformed elliptical phases, while the generic term "hyperbolic phase" also comprises rotated hyperbolic phases, shifted hyperbolic phases and deformed hyperbolic phases. These are the cases where $a \neq L$, and $\gamma \neq 0$, $\alpha \neq 0$, $\bar{x} \neq 0$, and/or $\bar{y} \neq 0$.

It has to be understood also that if $\bar{z} > 0$, then the generated hologram is a real image (and so it can be projected on a screen), while if $\overline{z} < 0$, then the generated hologram is a virtual image (and so it can be perceived by the human eye).

Preferably, the data processing unit is configured to control the operation of the modulating element 3 in a continuous way. This means that the data processing unit controls the modulating element 3 so as to change in time the set modulated light phase φ(x,y). This allows to change in time the length, the position and the orientation in space of the generated line segment hologram. Further, since the invention allows a fast and cost-effective generation of each line segment hologram, the data processing unit can change the set modulated light phase φ(x,y) at a high rate in time, allowing to generate a line segment hologram that changes in time with smooth transitions.

According to the invention, the apparatus 1 can generate also a hologram comprising more than one single line segment. In this case, the modulating element sets the modulated light phase φ simulating the effect of an astigmatic lens for each line segment.

In particular, the modulated light phase φ(x,y) for each point (x,y) of the active region 35 is calculated using a superposition algorithm, superposing each modulated light phase $\varphi_j(x,y)$ that would be set by the modulating element 3 if a single j-th line segment was to be generated.

Therefore, being $\theta_j$ a j-th real number and N the total number of line segments to be generated, the modulated light phase φ(x,y) for each point (x,y) of the active region 35 is set as follows:

$$\varphi(x,y) = \arg\left[\sum_{j=1}^{N} \exp[i(\varphi_j(x,y) + \theta_j)]\right]$$

This allows to generate even complex holograms composed of many line segments. If the data processing unit is configured to control the operation of the modulating element 3 in a continuous way, it is possible to generate a hologram comprising many line segments that changes in time with smooth transitions.

Preferably each $\theta_j$ is randomly generated, more preferably in the range between 0 and 2n. This random superposition algorithm minimizes the time needed by the data processing unit to calculate the value of the modulated light phase φ(x,y), maximizing the smoothness of the transitions when the hologram changes in time.

Alternatively, each $\theta_j$ can be computed using a phase retrieval algorithm, preferably a Gerchberg-Saxton algorithm. This superposition algorithm maximizes the quality and definition of the hologram.

Again with reference to figure 1, the coherent light beam 20 illuminates the modulating element 3 forming the smallest possible angle of incidence. The angle of incidence of the coherent light beam 20 with the modulating element 3 is preferably less than 15°, more preferably less than 10°.

The modulating element 3 has a pixel pitch less than 20 um, preferably less than 5 um. In fact, the smaller is the pixel pitch of the modulating element 3, the larger is the region of space where the hologram can be generated, and the larger is the dimension of the hologram that can be generated.

The apparatus 1 further comprises a telescope 4 having a focus plane, and a filter 5 positioned in the focus plane and configured to absorb a portion of the modulated light beam 30.

The telescope 4 preferably consists in a four-f system 4 and comprises a first converging lens 40 having a first focal distance and a second converging lens 41 having a second focal distance; the first converging lens 40 and the second converging lens 41 are lined so as to refract the modulated light beam 30 one after the other, and are separated by a distance that is substantially equal to the sum of the first focal distance and the second focal distance, so as to define the focus plane (which in a four-f system is called the Fourier plane) between the two converging lenses 40, 41 at a distance from the first converging lens 40 that is equal to the first focal distance and at a distance from the second converging lens 41 that is equal to the second focal distance. The telescope 4 is positioned in such a way that the distance between the modulating element 3 and the first converging lens 40 is substantially equal to the first focal distance.

A filter 5 is positioned in the focus plane, and is configured to absorb the zero-order portion of the modulated light beam 30. The filter 5 can be a circular absorber that absorbs the unmodulated part of the modulated light beam 30 produced by the modulating element 3.

The apparatus 1 further comprises a polarizing element 6 configured to polarize the coherent light beam 20. In particular, the polarizing element 6 can be a linear light polarizer configured to linearly polarize the coherent light beam 20.

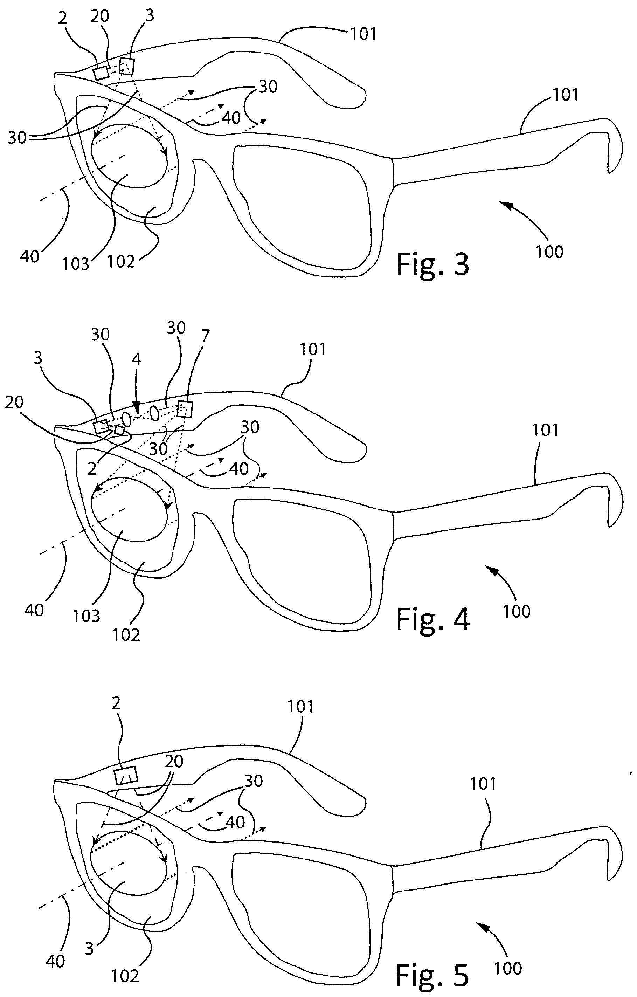

With reference to figures 3, 4 and 5, according to the invention the apparatus 1 can be integrated in a head-mountable device 100 configured to be worn by a wearer on the head in such a way that at least a part of the device 100 is positioned near an eye, allowing to direct the modulated light beam 30 into the eye. In this way, the apparatus 1 can generate a hologram that is projected on the wearer's retina, in such a way that the hologram can be directly perceived by the wearer. This allows to create a virtual reality composed by the holograms generated by the apparatus 1.

Preferably the device 100 is configured to allow also ambient light 40 to reach the eye, allowing the wearer to see the real world together with the holograms. In this way the wearer can experience an augmented reality in which the holograms generated by the apparatus 1 are superimposed to the real world.

If the data processing unit is configured to control the operation of the modulating element 3 in a continuous way, it is possible to create a virtual reality or an augmented reality that are detailed and continuously updated in real time.

The device 100 can be an eyewear 100 that comprises at least a temple 101 and at least a lens 102 configured to be positioned in front of the eye.

With particular reference to figure 3, in a first embodiment of the eyewear 100 the source 2 and the modulating element 3 are supported by the temple 101, preferably integrated into the temple 101. The modulating element 3 is positioned and configured to reflect the coherent light beam 20 directing the modulated light beam 30 directly towards the inner surface of the lens 102, that is the surface that faces the eye when the eyewear 100 is worn.

The lens 102 supports an optical combiner 103 that is configured to further reflect the modulated light beam 30 towards the eye. The optical combiner 103 is preferably integrated into the lens 102.

The optical combiner 103 is configured to allow also ambient light 40 to pass through the lens and reach the eye: in this way the eye can receive both the modulated light beam 30 that generates the hologram and the ambient light 40 of the real world, letting the wearer experience an augmented reality. Therefore, the optical combiner 103 is preferably at least semi-transparent.

With reference to figure 4, in a second embodiment of the eyewear 100 the source 2 and the modulating element 3 are supported by the temple 101. A four-f system 4 is also supported by the temple 101 together with a mirror 7: the modulated light beam 30 produced by the modulating element 3 passes through the four-f system 4 and is reflected by the mirror 7 towards the inner surface of the lens 102. The modulating element 3 is therefore positioned and configured to direct the modulated light beam 30 indirectly towards the inner surface of the lens 102.

The lens 102 supports an optical combiner 103 that is configured to further reflect the modulated light beam 30 towards the eye. The optical combiner 103 is configured to allow also ambient light 40 to pass through the lens and reach the eye, and therefore it is preferably at least semi-transparent.

Preferably, the source 2, the modulating element 3, the four-f system 4 and the mirror 7 are integrated into the temple 101, and the optical combiner 103 is integrated into the lens 102.

With reference to figure 5, in a third embodiment of the eyewear 100 the source 2 is supported by the temple 101 and the modulating element 3 is supported by the lens 102. The modulating element 3 is configured to direct the modulated light beam 30 directly towards the eye, and to allow also ambient light 40 to pass through the lens and reach the eye. Therefore, the modulating element 3 is preferably at least semi-transparent.

Preferably, the source 2 is integrated into the temple 101, and the modulating element 3 is integrated into the lens 102.

The scope of protection of the invention also includes a computer program comprising instructions that, when the program is executed by the data processing unit, cause the data processing unit to control the modulating element 3 so as to set the modulated light phase $\varphi$ simulating the effect of an astigmatic lens.

The scope of protection of the invention also includes a computer-readable medium having stored thereon instructions that, when the medium is read by the data processing unit cause the data processing unit to control the modulating element 3 so as to set the modulated light phase $\varphi$ simulating the effect of an astigmatic lens. The present invention has been described in an illustrative and non-limiting way according to relative favourite embodiments, but it is clear that the person skilled in the art could perform many variations and modifications, all of which are within the scope of the invention.

**Claims**

1. Method for generating a hologram comprising at least a line segment, comprising the step of illuminating a modulating element (3) with a coherent light beam (20) obtaining a modulated light beam (30) having a modulated light phase ($\varphi$), **characterized in that** the modulating element (3) sets the modulated light phase ($\varphi$) simulating the effect of an astigmatic lens.

2. Method according to claim 1, wherein the modulating element (3) sets the modulated light phase ($\varphi$) to an elliptical phase or a hyperbolic phase.

3. Method according to claim 1 or claim 2, wherein the modulating element (3) has a substantially disk-shaped active region having a diameter (L) and a centre (O), and defining a Cartesian coordinate system centred in the centre (O) that comprises an optical axis (z) perpendicular to the active region, a first reference axis (x) and a second reference axis (y).

4. Method according to claim 3, wherein each point of the active region identified in the Cartesian coordinate system by coordinates $(x,y)$ sets the modulated light phase $\varphi$ according to the equation

$$\varphi(x,y) = (p'x'^2 + q'y'^2) + \frac{2\pi}{\lambda\bar{z}}(\bar{x}'x' + \bar{y}'y')$$

wherein:

$$p' = \frac{\pi(L - a\cos\gamma)}{\lambda\bar{z}L} \text{ and } q' = \frac{\pi}{\lambda(\bar{z} - x'\tan\gamma)};$$

$$x' = x\cos\alpha - y\sin\alpha \text{ and } y' = x\sin\alpha + y\cos\alpha;$$

$$\bar{x}' = \bar{x}\cos\alpha - \bar{y}\sin\alpha \text{ and } \bar{y}' = \bar{x}\sin\alpha + \bar{y}\cos\alpha;$$

- $L$ is the diameter of the active region;
- $\lambda$ is a characteristic wavelength of the coherent light beam (20);
- $a$ is the length of the line segment;
- $\bar{x}, \bar{y}, \bar{z}$ are the coordinates measured in the Cartesian coordinate system of the midpoint of the line segment;
- $\gamma$ is the inclination angle of the line segment with respect to a reference plane (xy) defined by the first reference axis (x) and the second reference axis (y);
- $\alpha$ is the angle defined between the orthogonal projection of the line segment on the reference plane (xy) and the first reference axis (x).

5. Method according to any of the preceding claims, wherein the modulating element (3) is a spatial light modulator, preferably a phase-only spatial light modulator.

6. Method according to any of the preceding claims, wherein the hologram comprises at least two line segments, the modulating element (3) setting the modulated light phase ($\varphi$) simulating the effect of an astigmatic lens for each line segment.

7. Method according to claim 6, wherein each point of the active region identified in the Cartesian coordinate system by coordinates $(x,y)$ sets the modulated light phase $\varphi$ according to the equation

$$\varphi(x,y) = \arg\left[\sum_{j=1}^{N} \exp[i(\varphi_j(x,y) + \theta_j)]\right]$$

wherein:

- $\varphi_j(x,y)$ is the modulated light phase that would be set by the point of the modulating element (3) identified in the Cartesian coordinate system by coordinates $(x,y)$ if the modulating element (3) were to generate only the j-th line segment;
- $\theta_j$ is a real number for each value of j.

8. Apparatus (1) for generating a hologram comprising at least a line segment, comprising:

- a source (2) of coherent light configured to generate a coherent light beam (20), and
- a modulating element (3) configured to modulate the coherent light beam (20) obtaining a modulated light beam

(30) having a modulated light phase ($\varphi$), **characterized in that** the modulating element (3) is configured to set the modulated light phase ($\varphi$) simulating the effect of an astigmatic lens.

9. Apparatus (1) according to claim 8, wherein the modulating element (3) is configured to set the modulated light phase ($\varphi$) to at least one of an elliptic phase and a hyperbolic phase, and preferably also to a parabolic phase.

10. Apparatus (1) according to claim 8 or claim 9, further comprising a data processing unit associated to the modulating element (3) and configured to control the modulating element (3), preferably in a continuous way.

11. Apparatus (1) according to any of claim 8 to 10, further comprising a telescope (4) having a focus plane, and a filter (5) positioned in the focus plane and configured to absorb a portion of the modulated light beam (30), in particular a zero-order portion of the modulated light beam (30).

12. Head-mountable device (100) comprising an apparatus (1) according to any of claims 8 to 11 and configured to be worn by a wearer, so that the modulated light beam (30) can be perceived by an eye of the wearer.

13. Device (100) according to claim 12, wherein the device (100) is an eyewear comprising at least a temple (101) and at least a lens (102) configured to be positioned in front of the eye.

14. Device (100) according to claim 13, wherein the source (2) is supported by the temple (101), and the modulating element (3) is supported by the temple (101) and configured to direct the modulated light beam (30) towards the lens (102), the device (100) further comprising an optical combiner (103) supported by the lens (102) in order to be illuminated by the modulated light beam (30), the optical combiner (103) being configured to reflect the modulated light beam (30) towards the eye while allowing also ambient light to pass through the lens (102) and reach the eye.

15. Device according to claim 13, wherein the source (2) is supported by the temple (101), and the modulating element (3) is supported by the lens (102) and configured to direct the modulated light beam (30) towards the eye while allowing also ambient light to pass through the lens (102) and reach the eye.

Fig. 1

Fig. 2

Fig. 3

Fig. 4

Fig. 5

Europäisches
Patentamt

European
Patent Office

Office européen
des brevets

## EUROPEAN SEARCH REPORT

**Application Number**

EP 24 42 5034

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2018/129052 A1 (MORRISON VANCE R [CA])<br>10 May 2018 (2018-05-10)<br>* abstract *<br>* figures 1-3 *<br>* paragraph [0025] - paragraph [0032] *<br>----- | 1-3,5,6,<br>8-15<br>4,7 | INV.<br>G03H1/00<br>G02B27/01<br>G03H1/22 |

**TECHNICAL FIELDS
SEARCHED      (IPC)**

G02B
G03H

The present search report has been drawn up for all claims

| Place of search | Date of completion of the search | Examiner |
|---|---|---|
| Munich | 28 November 2024 | Sittler, Gilles |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 42 5034

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2024

| Patent document cited in search report | Publication date | Patent family member(s) | Publication date |
|---|---|---|---|
| US 2018129052 A1 | 10-05-2018 | US 2018129052 A1 | 10-05-2018 |
| | | US 2018129053 A1 | 10-05-2018 |

EPO FORM P0459

For more details about this annex : see Official Journal of the European Patent Office, No. 12/82